# EUROPÄISCHE PATENTSCHRIFT

(11) **EP 3 928 440 B1**
(45) Veröffentlichungstag und Bekanntmachung des Hinweises auf die Patenterteilung: **15.10.2025**
(21) Anmeldenummer: 20706499.9
(22) Anmeldetag: 21.02.2020
(51) Int. Cl.: H04B 7/155

(54) **REPEATER-SYSTEM**
REPEATER SYSTEM
SYSTÈME DE RÉPÉTETEUR

(30) Priorität: 21.02.2019 DE 102019104458
(43) Veröffentlichungstag der Anmeldung: 29.12.2021
(73) Patentinhaber: TELEFONAKTIEBOLAGET LM ERICSSON (PUBL), 164 83 Stockholm (SE)
(72) Erfinder: JACOB, Martin, 83026 Rosenheim (DE); SEEOR, Alexander, 83059 Kolbermoor (DE); GÖTTL, Maximilian, 83112 Frasdorf (DE); DAMM, Frieso, 83024 Rosenheim (DE); TSCHERNER, Andreas, 83209 Prien am Chiemsee (DE); MOHR, Markus, 83022 Rosenheim (DE)
(74) Vertreter: Ericsson
(86) Internationale Anmeldenummer: PCT/EP2020/054663
(87) Internationale Veröffentlichungsnummer: WO 2020/169823

(56) Entgegenhaltungen:
- WO-A1-2018/009035
- WO-A1-2018/199461
- KR-A- 20040 092 621
- KR-A- 20190 006 392
- US-A1- 2002 039 885
- US-A1- 2012 188 919
- US-A1- 2019 020 401
- US-A1- 2019 253 129

## Beschreibung

### Die Erfindung betrifft einen Repeater zur Weiterleitung von Funksignalen

Um den Bedarf an immer größeren Datenraten in drahtlosen Netzen gerecht zu werden, werden derzeit auch die Frequenzen im Millimeter-Wellenbereich untersucht und es steht bereits fest, dass diese Frequenzen im LTE-Nachfolgestandard (5G) zum Einsatz kommen sollen. Anwendungsgebiete für diese Frequenzen reichen von Fixed Wireless-Access (FWA) bis zu typischen Mobilfunknetzen.

Die Mobilfunknetz-Abdeckung im Millimeter-Wellenbereich ist im Gegensatz zu den herkömmlichen Mobilfunkfrequenzen stärker limitiert. So ist die Freiraumdämpfung bei 28 GHz 20 bis 30 dB höher als bei den herkömmlichen Mobilfunkfrequenzen. Dazu kommen signifikant höhere Ausbreitungsverluste durch Vegetation und hohe Penetrationsverluste von Baumaterialien, wie Glas und Beton. Erschwerend kommt hinzu, dass die Ausbreitung um Hausecken oder über Hausdächer in diesem Frequenzbereich wegen hoher Beugungsverluste, nicht möglich ist (siehe "Millimeter Wave Mobile Communications for 5G Cellular: It Will Work!" von Theodore S. Rappaport et al, IEEE Access, vol. 1, S 335-349, 10 May 2013).

Darüber hinaus ist die Leistungsfähigkeit verfügbarer analoger Hardware begrenzt (siehe 3GPP Technical Report No. 38.803 - v 14.2.0 von September 2017). Dabei ist die abgestrahlte Leistung auf der Senderseite insbesondere durch die Effizienz der Leistungsverstärker limitiert. Auf der Empfangsseite begrenzen hohe Leitungsverluste und die verfügbare LNA (Low-Noise-Amplifer = geräuscharmer Verstärker) -Technologie die Rauschzahl. Dies hat zur Folge, dass ein flächendeckendes Netz engmaschiger aufgebaut werden muss, was zu erhöhten Kosten (CAPEX und OPEX) führt.

Eine Lösung um die Netzabdeckung kosteneffizient zu erhöhen ist der Einsatz von Repeatern oder Relay-Technologien. Die Repeater-Funktionalität ist bereits aus GSM-, UMTS- und LTE-Netzen bekannt (siehe 3GPP Technical Specifications TS 25.106, 25.107, 25.113, 25.116, 25.143, 25.153, 36.106). Im Zuge der Entwicklung von LTE-A wurden im 3GPP Release 10 auch sogenannte Relay Nodes eingeführt (3GPP TS 36.116, 36.117, 36.216).

Vor den oben aufgeführten Hintergründen ist eine Lösung für das Netzabdeckungsproblem auch im Millimeter-Wellenbereich und zukünftigen Mobilfunkstandards mit Hilfe von Repeatern erstrebenswert. Konkrete Lösungsansätze stellen allerdings gerade wegen der geschilderten Restriktionen eine besondere technische Herausforderung dar, die mit dem derzeitigen Stand der Technik nicht begegnet werden kann.

Repeater zur Weiterleitung von Funksignalen sind in dem Stand der Technik bekannt. Der Repeater empfängt Funksignale von einem Sender bei einer Übertragungsfrequenz aus einer Richtung, verstärkt die Signale und strahlt die empfangenen Funksignale in eine andere Richtung ab. Ein Beispiel eines solchen Repeaters zeigt das US Patent US7,577,398 B2 (Andrews LLC), das einen Repeater mit einem Gehäuse mit zwei abgewandten Flächen offenbart. Mindestens eine Antenne ist jeweils auf den zwei abgewandten Flächen angebracht und die Antennen strahlen Funksignalen in entgegensetzten Richtungen. Innerhalb des Gehäuses ist ein Schaltkreis vorhanden, der die Signale zwischen einer der Antennen und der anderen Antenne weiterleitet.

Das Repeater-System dieses Dokuments eignet sich zum Beispiel für die Versorgung der inneren Bereiche eines Gebäudes. Zur Versorgung von Funknetzen innerhalb von Gebäuden sind mehrere Patentdokumente bekannt. Zum Beispiel zeigen die US Patentschrift No. US 6,374,119 B1 (Jun et al), internationale Patentanmeldung Nr. WO 98/54844 (LGC Wireless), europäisches Patent Nr. EP 1 224 821 B1 (Qualcomm) und deutsche Patentanmeldung Nr. DE 10 2015 011 875 A1 (Kathrein) ein derartiges System.

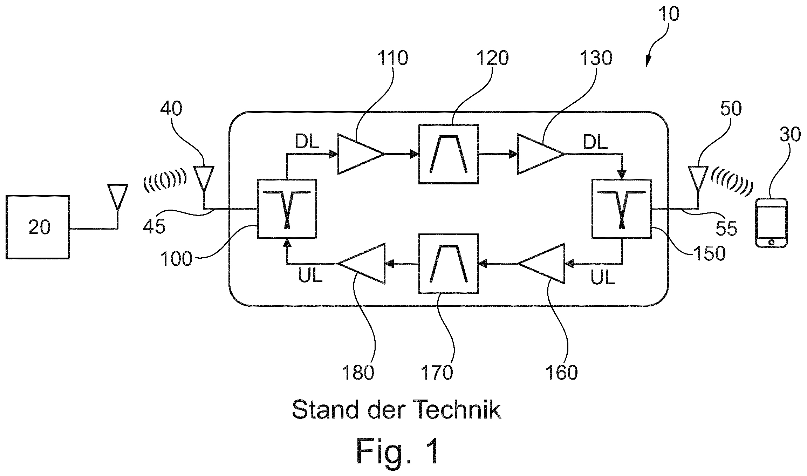

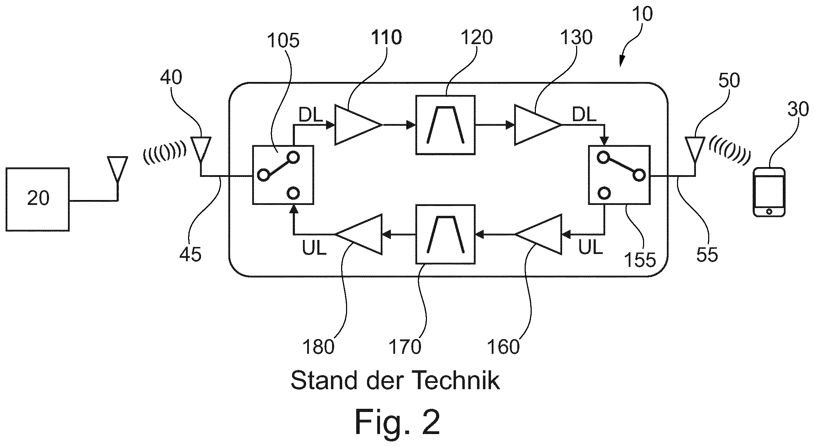

Figuren 1 und 2 stellen den typischen Aufbau von Repeater-Lösungen nach dem Stand der Technik dar. Der Repeater 10 hat eine Donor-Antenne 40 und eine Service-Antenne 50. Die Donor-Antenne 40 empfängt Signale von einer Basisstation 20 und die Service-Antenne 50 überträgt Funksignale an eine Mobilstation 30, wie ein Smartphone oder Tablet. Die an den Repeater 10 angeschlossenen Donor-Antennen 40 und die Service-Antennen 50 können in Abhängigkeit der gegebenen Situation am Installationsort mehr oder weniger weit von dem Repeater 10 entfernt installiert werden.

In solchen Fällen werden die Donor-Antennen 40 und die Service-Antennen 50 mit dem Repeater 10 über Koaxialleitungen 45 und 55 verbunden. Die hierfür verwendeten Koaxialleitungen 45 und 55 weisen bekanntlich eine frequenzabhängige Signaldämpfung auf, die mit steigenden Frequenzen und Kabellänge zunimmt (siehe https://de.wikipedia.org/wiki/Koaxialkabel).

Der Repeater selbst enthält zwei Übertragungspfade. Der obere Übertragungspfad in diesen Figuren umfasst einen rauscharmen Downlink-Verstärker 110, ein Downlink-Bandpassfilter 120 und einen Downlink-Leistungsverstärker 130 in einem Downlink (DL)-Pfad. Der untere Übertragungspfad ist der Uplink (UL)-Pfad und enthält einen rauscharmen Uplink-Verstärker 160, ein Uplink-Bandpassfilter 170 und einen Uplink-Leistungsverstärker 180. Die Donor-Antenne 40 ist mit einem ersten Duplexer 100 verbunden, der den Downlink-Pfad oder den Uplink-Pfad über eine Filtertrennung bei einem Frequency Division Duplex-Betrieb (FDD) auswählt. Die Service-Antenne 50 ist mit einem zweiten Duplexer 150 verbunden, der ebenfalls zwischen dem Downlink-Pfad und dem Uplink-Pfad über eine Filterfunktion im FDD-Betrieb auswählt.

In Fig. 2 ist eine ähnliche Ausführungsform nach dem Stand der Technik dargestellt, wobei diese Ausführung eine Time Division Duplex - Implementierung darstellt. Hier wird der erste Duplexer 100 durch einen ersten Schalter 105 und der zweite Duplexer 150 durch einen zweiten Schalter 155 ersetzt ist. Die sonstigen Bauelemente sind gleich den Elementen in Fig. 1 und haben die gleichen Bezugszeichen.

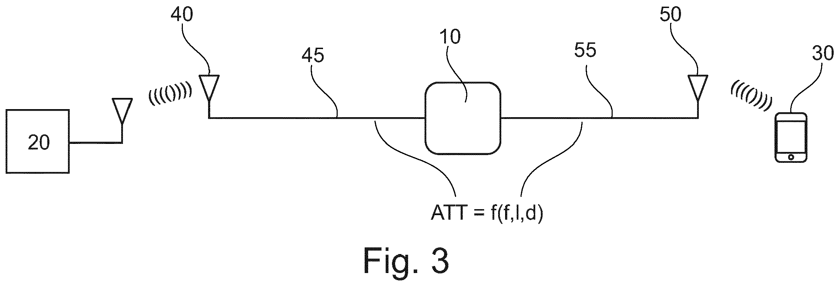

In Figur 3 wird stark vereinfacht dargestellt, wo im System die Signaldämpfung (ATT) der Koaxialleitungen 45, 55 in Abhängigkeit von Frequenz (f) und der Kabellänge (l) zum Tragen kommt. Die Signaldämpfung skaliert weiterhin mit dem Durchmesser des verwendeten Kabels in den Koaxialleitungen 45, 55. Mit kleiner werdendem Durchmesser (d) steigt bekanntlich die Dämpfung der Koaxialleitungen. Diese leitungsgebundenen Verluste liegen bei einer Nutzfrequenz von beispielsweise 28 GHz bei ca. 160dB/100m. Bei einer typischen Repeater-Verstärkung von 50dB würde durch eine gesamte Kabellänge von ca. 32m von der Donor-Antenne 40 zum Repeater 10 und weiter zur Service-Antenne 50 bereits die gesamte Signalverstärkung wieder auf den an der Donor-Antenne empfangenen Pegel gedämpft werden. Eine im Sinne der Signalverstärkung vorteilhafte Installation eines Repeater-Systems, wie sie beispielsweise auf Gebäudedächern und auf Straßenkreuzungen üblich ist, kann so nicht oder nur eingeschränkt vorgenommen werden.

US 2019/020401 A1 offenbart ein aktives Repeater-Gerät umfassend einen Primärsektor und einen oder mehrere Sekundärsektoren und empfängt einen ersten Strahl Eingangs-HF-Signale. Ein erster Satz analoger Basisbandsignale wird basierend auf dem empfangenen ersten Strahl von Eingangs-HF-Signalen erzeugt. Der erste Satz analoger Basisbandsignale wird in einen ersten Satz codierter Datensignale umgewandelt und Steuerinformationen werden aus dem ersten Satz codierter Datensignale extrahiert, indem nur ein Header-Teil des ersten Satzes codierter Datensignale ohne Demodulation des Datenteils des ersten Satzes codierter Datensignale decodiert wird.

KR 2004 0092621 A offenbart ein Notch-Relaissystem, um HF-Signale in ZF-Frequenzbandsignale umzuwandeln, indem ein Repeater in einen Donor-Repeater und einen Service-Repeater getrennt wird, wodurch der Verlust der Signalübertragung minimiert wird. Eine Donor-Antenne (302) ist installiert, um HF-Signale (Radiofrequenz) zu und von einer BTS (Basis-Transceiver-Station) (102) zu senden und zu empfangen. Eine Service-Antenne (308) ist installiert, um andere HF-Signale zu und von einem Teilnehmergerät (110) zu senden und zu empfangen. Ein Donor-Repeater (304) wandelt die HF-Signale in erste Zwischenfrequenzsignale um und wandelt zweite Zwischenfrequenzsignale in die von der Donor-Antenne (302) übertragenen HF-Signale um. Ein Service-Repeater (306) ist über ein Kabel mit dem Donor-Repeater (304) verbunden und wandelt die über die Service-Antenne (308) empfangenen HF-Signale in die zweiten Zwischenfrequenzsignale um, um die umgewandelten zweiten Zwischenfrequenzsignale an den Donor-Repeater zu übertragen (304) und wandelt die ersten Zwischenfrequenzsignale in die von der Service-Antenne (308) gesendeten HF-Signale um.

US 2012/188919 A1 offenbart ein Verfahren zum Bestimmen des Isolationsstatus des HF-Repeaters. Ein Modem im Repeater registriert sich bei einer Basis-Transceiver-Station (BTS). Die Uplink-Ausgangspegel eines Donor-HF-Transceivers werden kalibriert und im Modem gespeichert. Das Modem wird mit einer BTS-Übertragung synchronisiert, die am Donor-RF-Transceiver empfangen wird, und die Synchronisationsinformationen werden an einen Server-RF-Transceiver des Repeaters übermittelt. Anschließend kann eine Isolationserkennung und -messung zwischen der Donor-Sendeantenne und der Empfangs-Serverantenne des HF-Repeaters durchgeführt werden, und die Parameter der automatischen Verstärkungsregelung des Spender-HF-Transceivers und des Server-RF-Transceivers werden auf der Grundlage der Isolationserkennung und des Messwerts angepasst.

Die Erfindung liegt daher die Aufgabe zu Grunde, ein verbessertes Repeater-System zu entwickeln. Zur Lösung dieser Aufgabe wird erfindungsgemäß das Repeater-System nach Anspruch 1 bereitgestellt.

Die Trennung der Antennen ist bei einem Repeater, der die Funksignale im TDD-Modus überträgt, aus dem in den Fig. 1 und 2 gezeigten Stand der Technik nicht bekannt. Wie aus der Fig. 2 bekannt benötigen Repeater in einer TDD-Ausführung mehrere Schalter zum Umschalten der Antennen zwischen den Signalen auf den Übertragungspfaden (Uplink-Pfad und Downlink-Pfad). Diese Schalter verursachen im Bereich von Zentimeter- und Millimeter-Wellen erhebliche Einfügungsdämpfungen, die sehr nachteilig auf die Gesamtleistung des Repeater-Systems auswirken. Das Repeater-System dieses Dokuments weist allerdings kein internes Synchronisationssignal zur Steuerung der Schalter auf und dieses Synchronisationssignal müsste sonst aus den empfangenen Funksignalen erzeugt werden. Durch die getrennten Antennen wird die Notwendigkeit für die Ableitung bzw. Erzeugung des Synchronisationssignals vermieden.

Nach dem 5G-Standard haben die Frames in einem Funksignal kein festes Zeitraster und daher auch keine vorgegebene Framelänge, was auch das Umschalten zwischen den Übertragungspfaden und somit die Synchronisierung der Funksignale bei einer einzelnen, geteilten Donor-Antenne noch zusätzlich erschwert. Die Trennung der Antennen vermeidet auch eine Verzögerung der Übertragung der Signale auf Grund der an sonst notwendigen Schaltzeiten für die Schalter sowie die Ableitung des Synchronisationssignals. Als zusätzliche Herausforderung bei der Synchronisierung kann das bei 5G Übertragungen verwendete Beamsteering gelten, da hierdurch die Signale der Basisstation nicht immer zur Verfügung stehen, sondern nur dann, wenn der Beam gerade auf das Repeater-System (10) zeigt.

Das Repeater-System umfasst in einem Aspekt weitere Service-Einheiten und mehrere Kabel, welche jeweils die Donor-Einheit und die Weiteren der Service-Einheiten miteinander verbinden und die umgesetzten Funksignale über eine Distanz zwischen der Donor-Einheit und der verbundenen, weiteren Service-Einheiten übertagen. Diese weiteren Service-Einheiten sind zum Beispiel derart angepasst, dass die Service-Einheiten Funksignalen in unterschiedlichen Richtungen abstrahlen und empfangen und dabei unterschiedliche gegebenenfalls überlappende Sektoren bedienen können, um eine weitgehend vollständige Abdeckung des versorgten Bereichs zu ermöglichen. Die Service-Einheiten können im Betrieb Funksignale unterschiedlicher Übertragungsfrequenzen abstrahlen und empfangen.

Die Entkopplung zwischen die Uplink-Donor-Antennen und die Downlink-Donor-Antenne sollte mindestens 40 dB, und vorzugsweise 60 dB betragen.

In dem erfinderischen Aspekt des Repeater-Systems ist die Verstärkung des Donor-Downlink-Verstärkers einstellbar und wird so eingestellt, dass die Summe der Gesamtverstärkung zwischen der Donor-Downlink-Antenne und Service-Uplink-Antenne geringer als die Entkopplung zwischen Donor-Uplink-Antenne und der Service-Downlink-Antenne ist. Dabei werden Schwingungen in dem Repeater-System vermieden.

Um den Energiebedarf des Repeater-Systems zu verringern kann die Verstärkung der jeweiligen Verstärker des Downlink-Pfades in der Donor-Einheit und/oder Server-Einheit in einem TDD-System zu dem Zeitpunkt, in dem kein Nutz-Signal über diesen Verstärker läuft, abgeschaltet oder in der Verstärkung reduziert werden.

Die Erfindung wird nun anhand der Figuren näher erläutert. Es zeigen:
Fig. 1 ein erstes Beispiel eines Repeater-Systems nach dem Stand der Technik in einer FDD-Ausführung;
Fig. 2 ein zweites Beispiel eines Repeater-Systems nach dem Stand der Technik in TDD - Ausführung;
Fig. 3 eine Erläuterung über die Verluste in Koaxialleitungen;
Fig. 4A-4F mehrere Aspekte des Repeater-Systems;
Fig. 5A-5C mehrere Aspekte des Repeater-Systems mit einem gemeinsamen Kabel
Fig. 6 zeigt ein Repeater-System mit einem gemeinsamen Kabel bei zwei unterschiedlichen Zwischenfrequenzen;
Fig. 7 eine Anwendung des Repeater-Systems mit mehreren Service-Antennen;
Fig. 8A und 8B eine Sektorisierung der Übertragungskanäle;
Fig. 9A ein Blockschaltbild für einen Repeater mit vier Service-Antennen;
Fig. 9B den modularen Aufbau des Repeater-Systems;
Fig. 10 den modularen Aufbau des Repeater-Systems;
Fig. 11A-11E mehrere Aspekte für die Bündelung der Funksignale;
Fig. 12A-12E Repeater-System in der Frequenz-Domain;
Fig. 13 die Steuerung des Repeater-Systems;
Fig. 14 den Einsatz des Repeater-Systems in einem Gebäude;
Fig. 15 die Steuerung des Repeater-Systems.

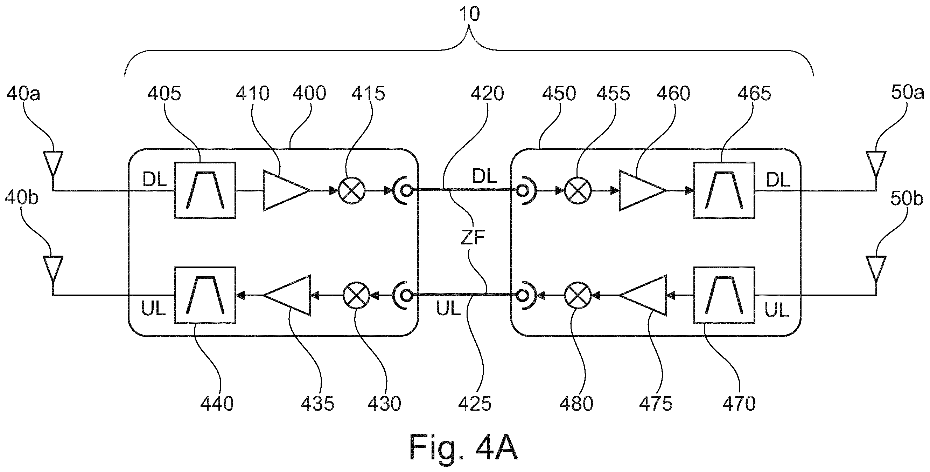

Fig. 4A zeigt einen ersten Aspekt der Erfindung mit einer ersten Frequenzumsetzer-Einheit 400 und einer zweiten Frequenzumsetzer-Einheit 450, welche über zwei Kabel 420 und 425 verbunden sind. Die Kabel 420 und 425 werden mit den Einheiten 400 und 450 durch Stecker und Steckverbinder verbunden und können auch weitere passive und aktive Elemente aufweisen. Die erste Frequenzumsetzer-Einheit 400, welche im weiteren als Donor-Einheit 400 bezeichnet wird, hat eine Downlink-Donor-Antenne 40a für einen Downlink-Pfad DL und eine Uplink-Donor-Antenne 40b für einen Uplink-Pfad UL. Der Downlink-Pfad DL in der Donor--Einheit 400 umfasst einen Donor-Downlink-Bandpassfilter 405, der mit der Donor-Antenne 40a verbunden ist und die empfangenen Funksignale filtert. Ein rauscharmer Donor-Downlink-Verstärker 410 ist mit dem Ausgang des Downlink-Bandpassfilters 405 verbunden und verstärkt die empfangenen Signale in dem gefilterten Frequenzbereich. Der Ausgang des rauscharmen Donor-Downlink-Verstärkers 410 ist mit einer Donor-Downlink-Mischeinrichtung 415 verbunden. Diese Donor-Mischeinrichtung 415 ist ein Frequenz-Abwärtswandler, der die Frequenz der empfangenen Signale auf eine (niedrige) Zwischenfrequenz umsetzt.

Der Uplink-Pfad UL in der Donor-Einheit 400 umfasst des weiteren eine Donor-Uplink-Mischeinrichtung 430, einen Donor-Uplink-Leistungsverstärker 435 und einen Donor-Uplink-Bandpassfilter 440. Der Uplink-Pfad UL empfängt die von der zweiten Frequenzumsetzer-Einheit 450, welche des weiteren als Service-Einheit 450 bezeichnet wird, übertragenen Signale. Die Donor-Uplink-Mischeinrichtung 430 ist ein Aufwärtswandler und konvertiert die Frequenz der empfangen Signale von der Zwischenfrequenz ZF in die Sendefrequenz. Die Signale werden anschließend in dem Donor-Uplink-Leistungsverstärker 435 verstärkt und in dem Donor-Uplink-Bandpassfilter 440 gefiltert. Der Ausgang des Donor-Uplink- Bandpassfilters 440 ist mit der zweiten Donor-Antenne 40b verbunden und die gefilterten Signale werden bei der Sendefrequenz (Übertragungsfrequenz) übertragen.

Die Service-Einheit 450 umfasst in dem Downlink-Pfad DL eine Service-Downlink-Mischeinrichtung 455, die mit dem Eingang eines Service-Downlink-Leistungsverstärkers 460 verbunden ist. Die Service-Downlink-Mischeinrichtung 455 ist einen Aufwärtswandler, der die zu übertragenden Signale von der Donor-Einheit 400 von der Zwischenfrequenz auf die Sendefrequenz konvertiert. Der Service-Downlink-Leistungsverstärker 460 verstärkt die Signale. Der Ausgang des Service-Downlink-Leistungsverstärkers 460 ist mit dem Eingang eines Service-Downlink-Bandpassfilters 465 verbunden, der die Signale filtert. Der Ausgang des Service-Downlink-Bandpassfilters 465 ist mit der Downlink-Service-Antenne 50a verbunden und die Downlink-Service-Antenne 50a strahlt die Signale bei der Sendefrequenz ab.

Der Uplink-Pfad der Service-Einheit 450 ist mit der Uplink-Service-Antenne 50b verbunden, die mit dem Eingang eines Service-Uplink-Bandpassfilters 470 verbunden ist. Dieser Service-Upload-Bandpassfilter 470 filtert die empfangenen Funksignale in einem bestimmten Frequenzbereich und leitet nur diese gefilterten Funksignale an einen rauscharmen Service-Upload-Verstärker 475, wo die Funksignale verstärkt werden. Die verstärkten Signale von dem rauscharmen Service-Uplink-Verstärker 475 werden an eine Service-Uplink-Mischeinrichtung 480 weitergeleitet, in der sie auf eine Zwischenfrequenz konvertiert werden, um über das Kabel 425 (eine Koaxialleitung) an die Donor-Einheit 400 übertragen zu werden.

In der Donor-Einheit 400 werden die empfangenen Signale auf dem Uplink-Pfad an eine Donor-Uplink-Mischeinrichtung 430 weitergeleitet und auf die Sendefrequenz zur Übertragung aufwärtsgewandelt, wie oben beschrieben.

Durch die Umsetzung der Frequenzen zwischen der Donor-Einheit 400 und der Service-Einheit 450 auf eine niedrigere Zwischenfrequenz ZF ist es möglich längere Koaxialleitungen für die Kabel 420 und 425 einzusetzen. Das bedeutet, dass die Donor-Einheit 400 und die Service -Einheit 450 voneinander entfernt betrieben werden können.

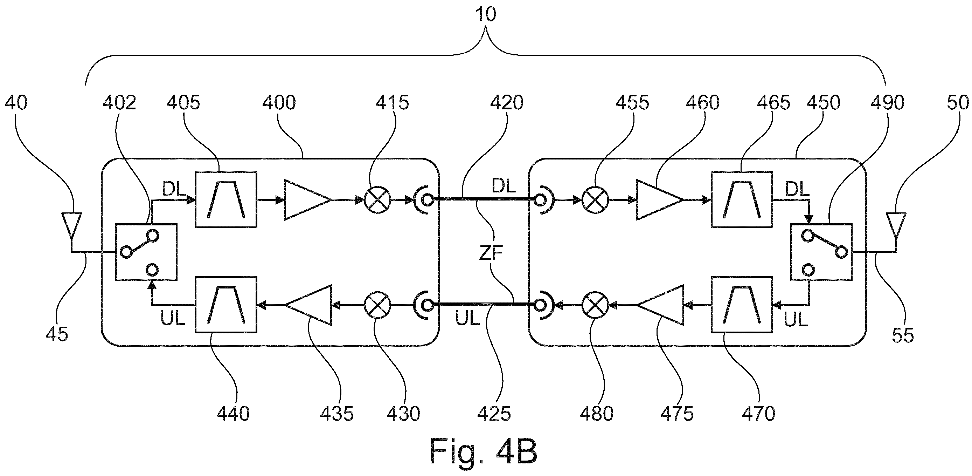

Fig. 4B zeigt einen Aspekt des Repeater-Systems 10, bei dem identische Elemente in der Donor-Einheit 400 und in der Service-Einheit 450 vorhanden sind. Diese identischen Elemente werden mit den gleichen Bezugszeichen gekennzeichnet.

Der in Fig. 4B dargestellte Aspekt unterscheidet sich von dem Aspekt der Fig. 4A durch eine einzelne Donor-Antenne 40 anstelle der zwei Donor-Antennen 40a und 40b und eine einzelne Service-Antenne 50 anstelle der zwei Service-Antennen 50a und 50b. Die einzelne Donor-Antenne 40 ist mit der Donor-Einheit 400 verbunden und die einzelne Service-Antenne 50 ist mit der Service-Einheit 450 verbunden ist.

Die Donor-Einheit 400 hat einen Donor-Schalter 402, der mit der einzelnen Donor-Antenne 40 und mit sowohl dem Downlink-Pfad DL als auch den Uplink-Pfad UL verbunden ist. Der Donor-Schalter 402 dient einer Umschaltung der Donor-Antenne 40 zwischen dem Downlink-Pfad DL und dem Uplink-Pfad UL, je nachdem ob Signale über die Donor-Antenne 40 empfangen oder gesendet werden. Ähnlich ist in der Service-Einheit 450 ein Service Schalter 490 vorhanden. Dieser Service-Schalter 490 ist ebenfalls mit dem Downlink-Pfad DL und mit dem Uplink-Pfad UL der Service-Einheit 450 und mit der einzelnen Service-Antenne 50 verbunden. Der Service-Schalter 490 kann die Signale von und an die Service-Antenne 50 zwischen den zwei Pfaden (Downlink-Pfad DL und Uplink-Pfad UL) umschalten.

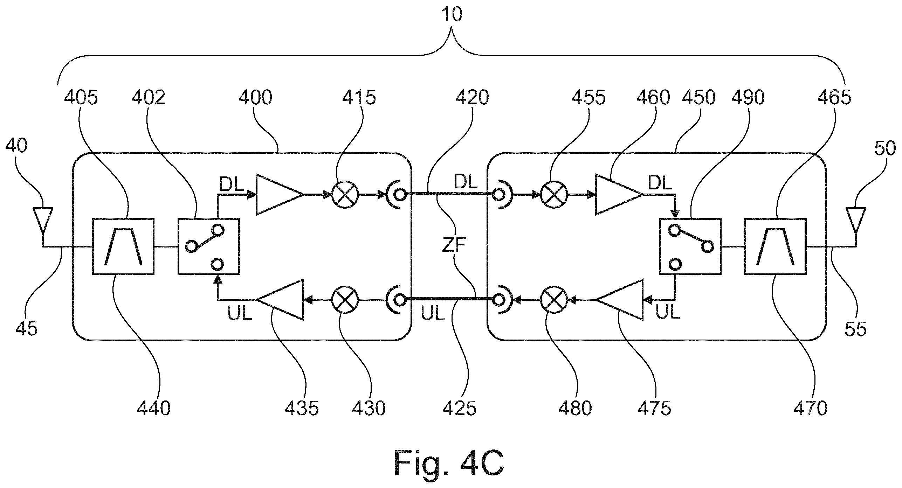

In einem dritten Aspekt der Erfindung (Fig. 4C) ist der Donor-Downlink-Bandpassfilter 405 und der Donor-Uplink-Bandpassfilter 440 durch einen einzelnen Donor-Bandpassfilter 405/440 ersetzt und der aus Fig. 4B bekannte Donor-Schalter 402 hinter dem gemeinsamen Bandpassfilter 405/440 versetzt. Ebenfalls ist in der Service-Einheit 450 der Service-Downlink-Bandpassfilter 465 und der Service-Uplink-Bandpassfilter 470 durch einen gemeinsamen Service-Bandpassfilter 465/470 ersetzt und der aus Fig. 4B bekannte Service-Schalter 490 zwischen dem gemeinsamen Service-Bandpassfilter 465/470 und dem Service-Downlink-Leistungsverstärker 460 und dem rauscharmen Service-Uplink-Verstärker 475 versetzt worden.

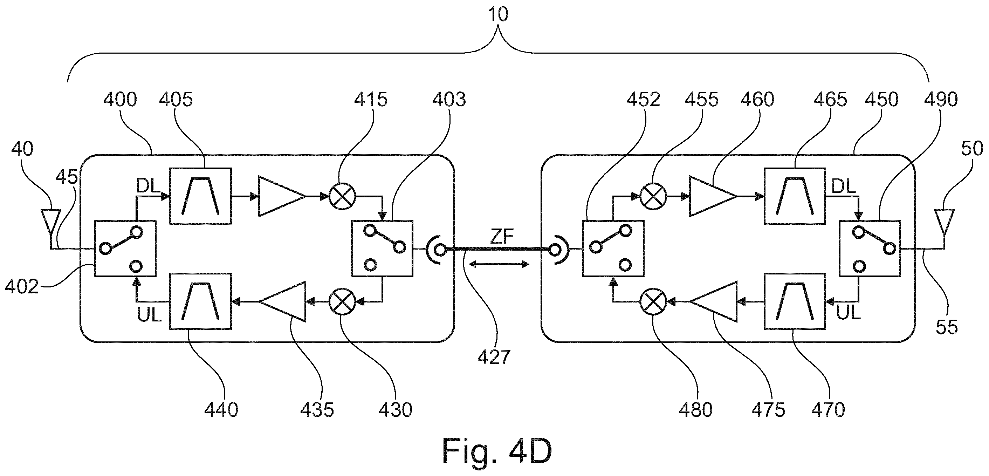

Ein vierter Aspekt des Repeater-Systems 10 ist in Fig. 4D dargestellt. In diesem Aspekt der Erfindung sind die zwei Kabel 420, 425 durch ein gemeinsames Kabel 427 (auch eine Koaxialleitung) ersetzt worden. Wie aus Fig. 4D zu entnehmen ist, benötigt daher die Donor-Einheit 400 einen Donor-Ausgangs-Schalter 403, der die Funksignale zwischen dem gemeinsamen Kabel 427 und der Donor-Downlink-Mischeinrichtung 415 und der Donor-Uplink-Mischeinrichtung 430 umschaltet. Ebenfalls ist in der Service-Einheit 450 ein Service-Eingangs-Schalter 452 vorhanden. Dieser Service-Eingangs-Schalter 452 ist ebenfalls mit der Service-Downlink-Mischeinrichtung 455 in dem Downlink-Pfad DL und mit der Service-Uplink-Mischeinrichtung 480 in dem Uplink-Pfad UL der Service-Einheit 450 verbunden und schaltet die Funksignale auf das gemeinsame Kabel 427.

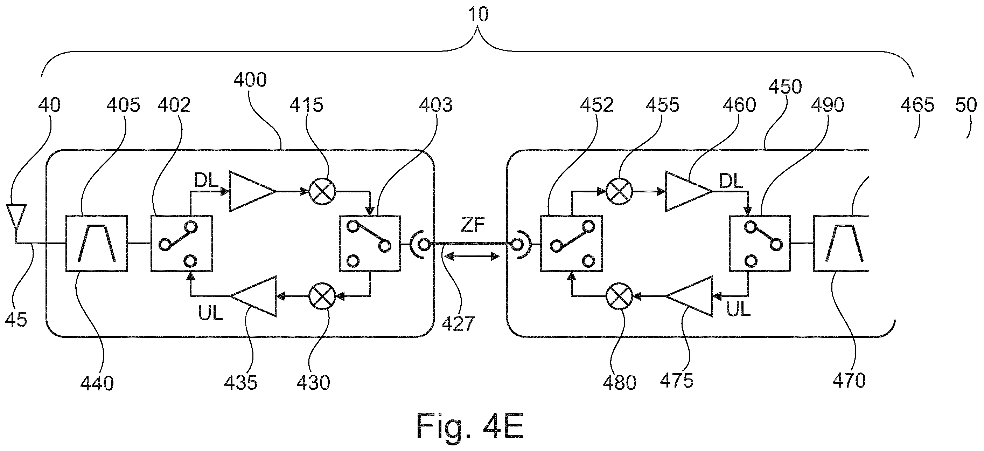

Ein fünfter Aspekt des Repeater-Systems 10 ist in Fig. 4E dargestellt. Wie aus der Fig. 4E zu erkennen ist, ist das gemeinsame Kabel 427 zwischen der Donor-Einheit 400 und der Service-Einheit 450 vorhanden. Es ist ebenfalls zu erkennen, dass der Donor-Schalter 402 und der Service-Schalter 490 in Positionen wie in dem in Fig. 4C dargestellten Aspekt vorhanden sind.

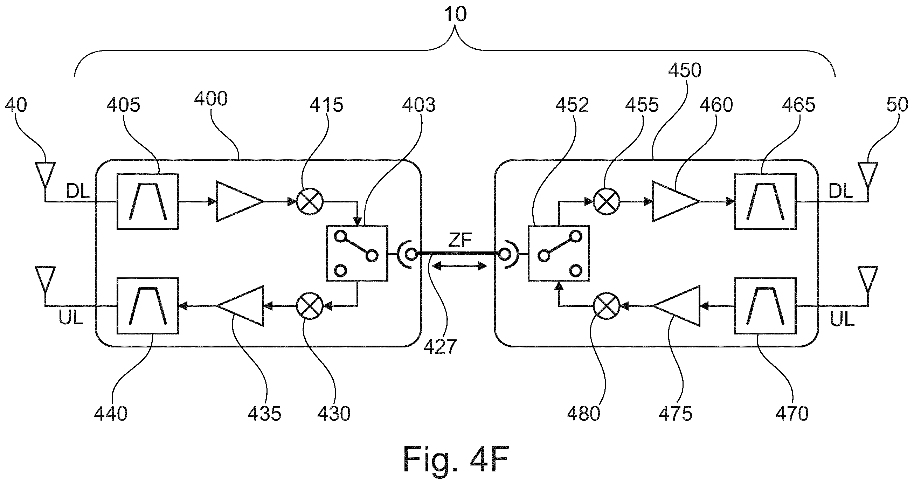

Ein weiterer Aspekt der Erfindung ist in Fig. 4F zu sehen. In dem Aspekt von Fig. 4F ist ebenfalls ein gemeinsames Kabel 427 zwischen der Donor-Einheit 400 und der Service-Einheit 450 vorhanden. Dieser Aspekt entspricht sonst dem ersten Aspekt der Erfindung (Fig. 4A) mit den zwei Donor-Antennen 40a und 40b und den zwei Service-Antennen 50a und 50b. Selbstverständlich benötigt dieser Aspekt der Erfindung den Donor-Ausgangs-Schalter 403 und den Service-Eingangs-Schalter 452, um die Funksignale auf das gemeinsame Kabel 427 bei der Zwischenfrequenz ZF umzuschalten.

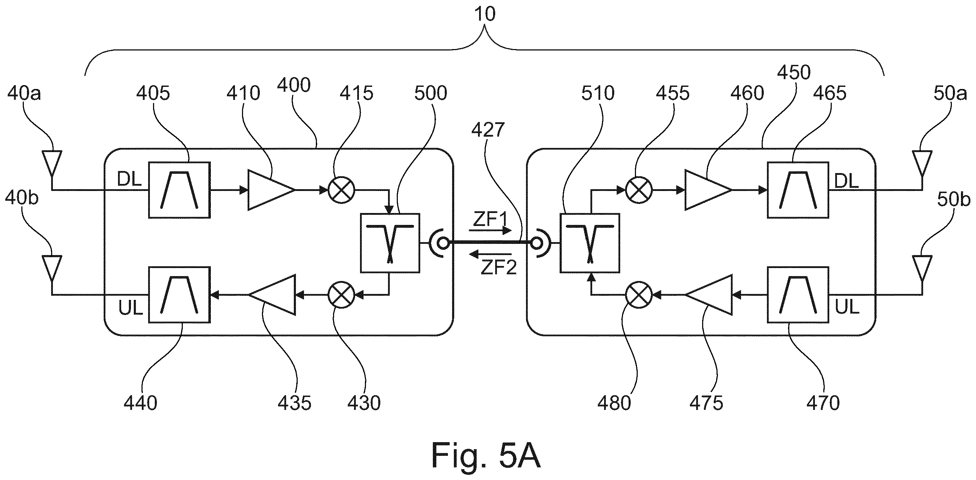

Ein weiterer Aspekt der Erfindung ist in Fig. 5A dargestellt. Dieser Aspekt der Erfindung entspricht weitgehend den früheren Aspekten der Erfindung, wobei sich dieser Aspekt darin unterscheidet, dass das gemeinsame Kabel 427 Signale bei zwei unterschiedlichen Frequenzen ZF1 und ZF2 überträgt. Zum Beispiel werden die Funksignale auf dem Downlink-Pfad DL zwischen der Donor-Einheit 400 und der Service-Einheit 450 bei einer ersten Zwischenfrequenz ZF1 über das gemeinsame Kabel 427 übertragen und die Funksignale auf dem Downlink-Pfad DL zwischen der Service-Einheit 450 und der Donor-Einheit 400 auf einer zweite Frequenz ZF2 übertragen. In der Donor-Einheit 400 ist ein Donor-Duplexer 500 vorhanden, welcher die Funksignale auf den entsprechenden Pfad umleitet. Ebenfalls ist in der Service-Einheit 450 ein Service-Duplexer 510 vorhanden, dessen Funktion es ist, die Funksignale auf die entsprechenden Pfade im Uplink (UL) und im Downlink (DL) umzuleiten.

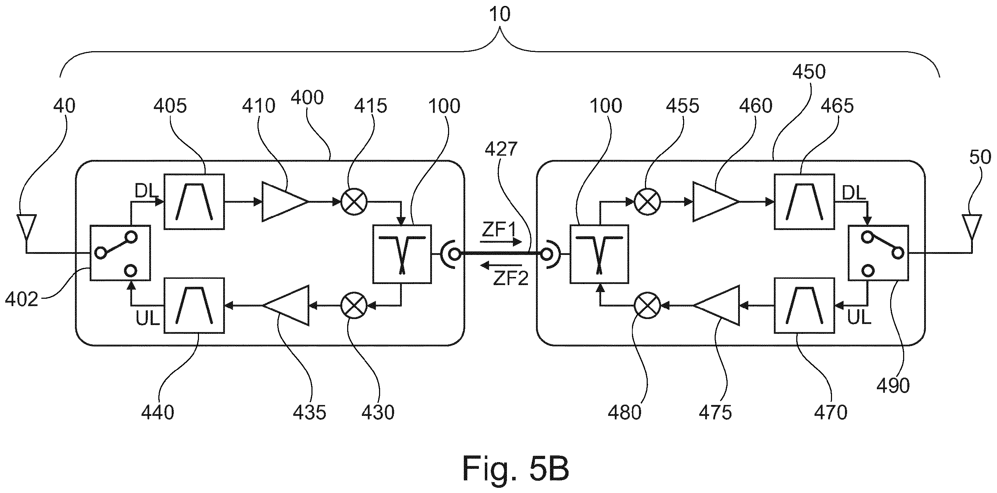

In Fig. 5B ist ein ähnlicher Aspekt des Repeater-Systems 10 dargestellt, wobei die zwei Donor-Antennen 40a und 40b des Repeater-Systems 10 aus Fig. 5A durch eine einzelne Donor-Antenne 40 ersetzt ist. Dementsprechend umfasst die erste Donor-Einheit 400 ebenfalls einen Donor-Schalter 402. Die zwei Service-Antennen 50a und 50b aus Fig. 5A sind ebenfalls durch eine gemeinsame Service-Antenne 50 in dem Aspekt von Fig. 5B ersetzt und ebenfalls ist ein Service-Schalter 490 in der Service-Einheit 450 vorhanden.

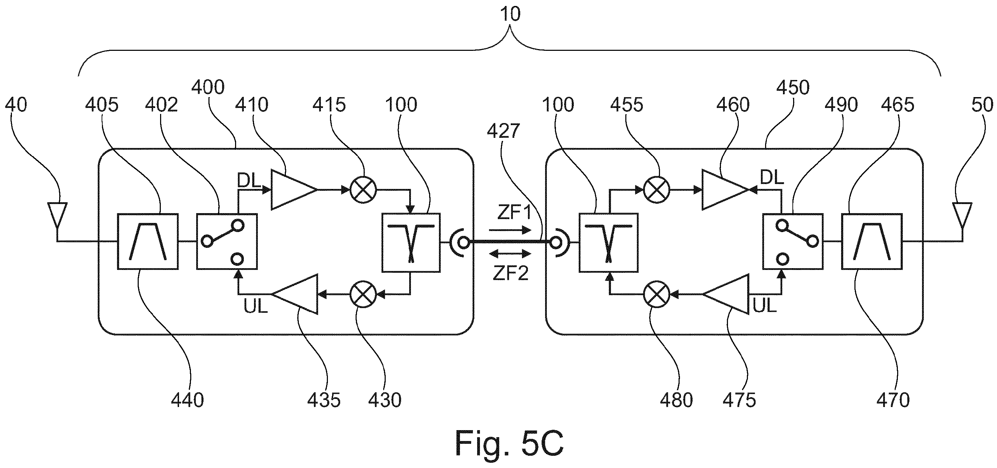

In Fig. 5C ist der Donor-Schalter 402 in der Donor-Einheit 400 verlagert, wie aus dem Aspekt aus den Figuren 4C und 4E bekannt ist. Ebenfalls ist der Donor-Schalter 490 in der Service-Einheit 450 vorgeschoben.

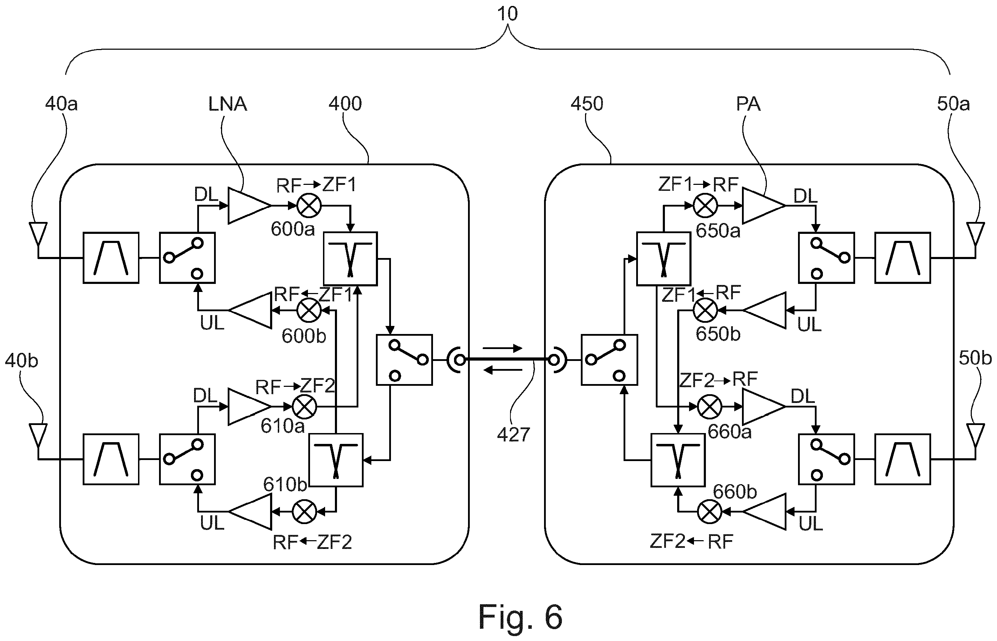

Fig. 6 zeigt einen weiteren Aspekt der Erfindung mit einem gemeinsamen Kabel 427, welcher Funksignale bei zwei unterschiedlichen Frequenzen ZF1 und ZF2 überträgt. Wie aus den Figuren zu erkennen ist, enthält die Donor-Einheit 400 zwei Downlink-Pfade DL und zwei Uplink-Pfade UL jeweils mit einer Mischeinrichtung 600a, 600b, 610a, 610b. Die Mischeinrichtungen 600a, 600b, 610a, 610b können die Frequenz der Funksignale entweder auf die Zwischenfrequenz ZF1 oder auf die Zwischenfrequenz ZF2 umsetzen und diese werden an die Service-Einheit 450 weitergeleitet, in der die Funksignale wieder auf die Übertragungsfrequenz umgesetzt werden. Ebenfalls enthält die Service-Einheit 450 zwei Downlink-Pfade DL und zwei Uplink-Pfade UL mit jeweils einer Mischeinrichtung 650a, 650b, 660a, 660b. Die sonstigen Elemente sind aus den Figuren 4A-4F und 5A-5D bekannt.

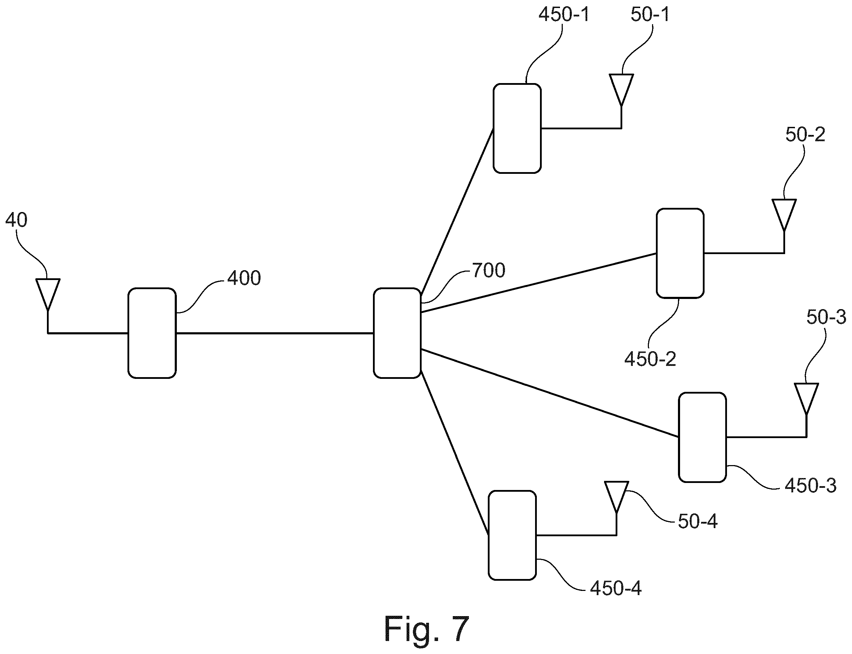

Eine Anwendung des Repeater-Systems 10 dieses Dokuments ist in Fig. 7 dargestellt. In dieser Figur 7 ist eine Mehrzahl von Service-Einheiten 450-1, 450-2, 450-3 und 450-4 dargestellt, die jeweils mit einer Service-Antenne 50-1, 50-2, 50-3 und 50-4 verbunden sind. Die Mehrzahl der Service-Einheiten 450-1, 450-2, 450-3 und 450-4 sind über Koaxialleitungen 720-1, 720-2, 720-3 und 720-4 mit einem Splitter 700 verbunden, welcher die Funksignale von der Donor-Einheit 400 auf die Mehrzahl der Service-Einheiten 450-1, 450-2, 450-3 und 450-4 teilt und weiterleitet. Der Splitter 700 ist mit der Donor-Einheit 400 über ein Kabel 710 verbunden. Dieser in Fig. 7 dargestellte Aspekt der Erfindung hat den Vorteil, dass unterschiedliche Abstrahlcharakteristika für die Funksignale bei der Mehrzahl der Service-Einheiten 450-1, 450-2, 450-3 und 450-4 eingesetzt werden können.

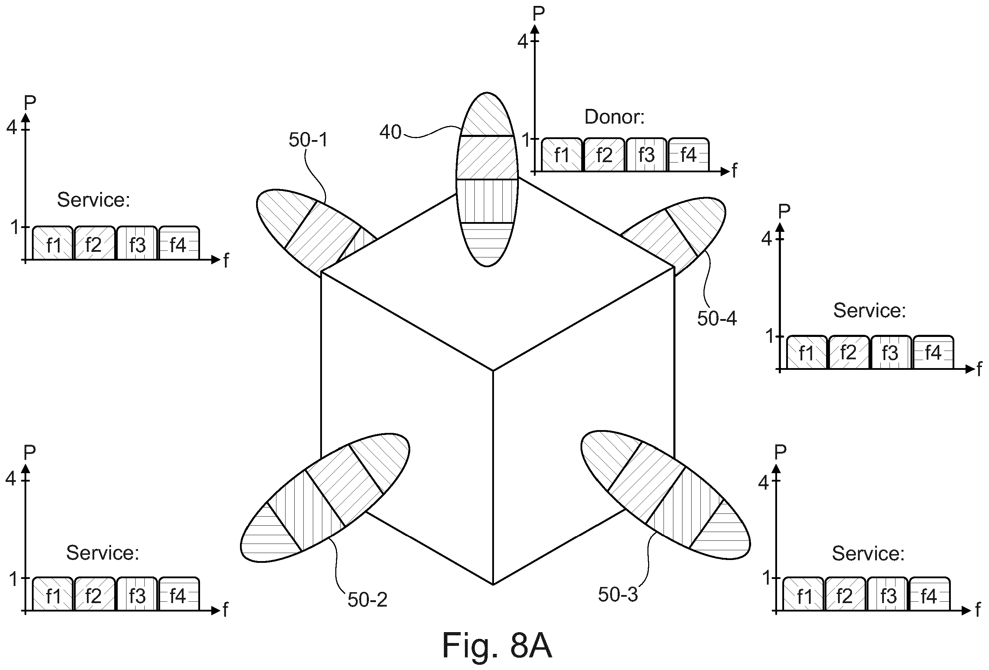

Fig. 8A zeigt ein Beispiel dieser Abstrahlcharakteristika, bei der die Donor-Antenne 40 Funksignale in vier unterschiedlichen Frequenzbereichen f1, f2, f3 und f4 von der (nicht dargestellten) Basisstation empfängt und über ein aus Fig. 7 bekannten Repeater-System 10 die empfangenen Funksignale in vier unterschiedlichen Richtungen in allen empfangenen Frequenzbereichen f1, f2, f3 und f4 in einer Art "Würfelform" über die vier unterschiedlichen Service-Antennen 50a-d abstrahlen kann. Jede Service-Antenne 50a-d strahlt alle vier Frequenzbereichen f1, f2, f3 und f4 ab.

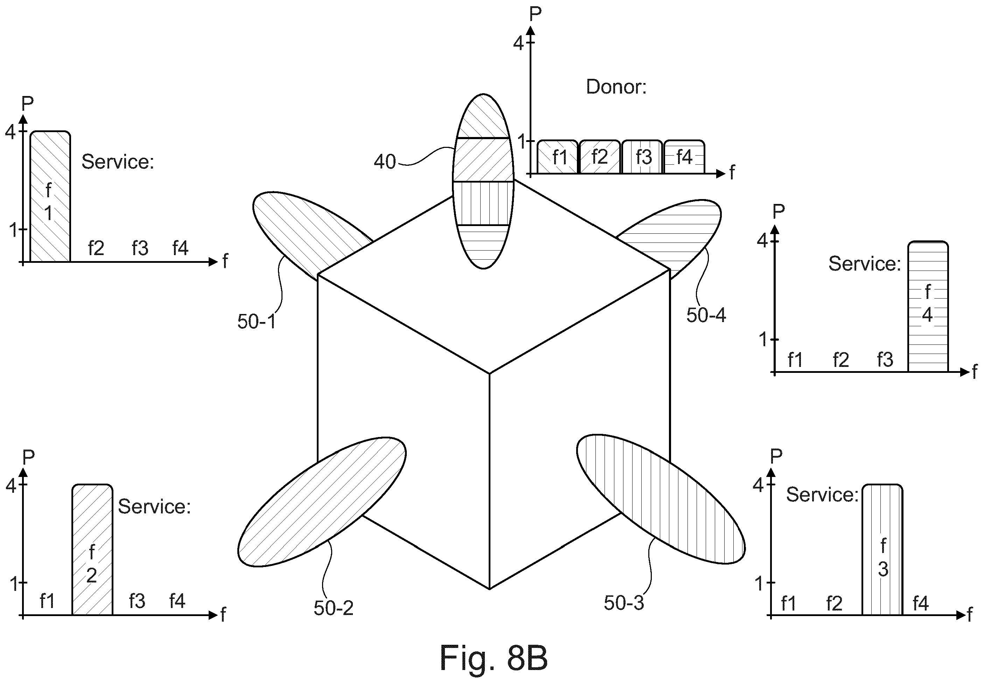

Im Gegensatz dazu zeigt Fig. 8B eine weitere Variante der Abstrahlcharakteristika. In dieser Fig. 8B strahlt jede Service-Antenne 50a-d Funksignale in nur einem Frequenzbereich f1, f2, f3, f4 ab. In anderen Worten werden die über die Donor-Antenne 40 empfangenen Funksignale in den vier Frequenzbereichen f1, f2, f3 und f4 jeweils in einer Richtung bei unterschiedlichen Frequenzbereichen f1, f2, f3 oder f4 über die jeweiligen Service-Antennen 50a-d abgestrahlt. Mit Hilfe dieses Repeater-System können daher bestimmte Sektoren (Empfangsbereiche) mit Funksignalen einer bestimmten Frequenz versorgt werden; die Funksignale in anderen Sektoren haben eine andere Frequenz.

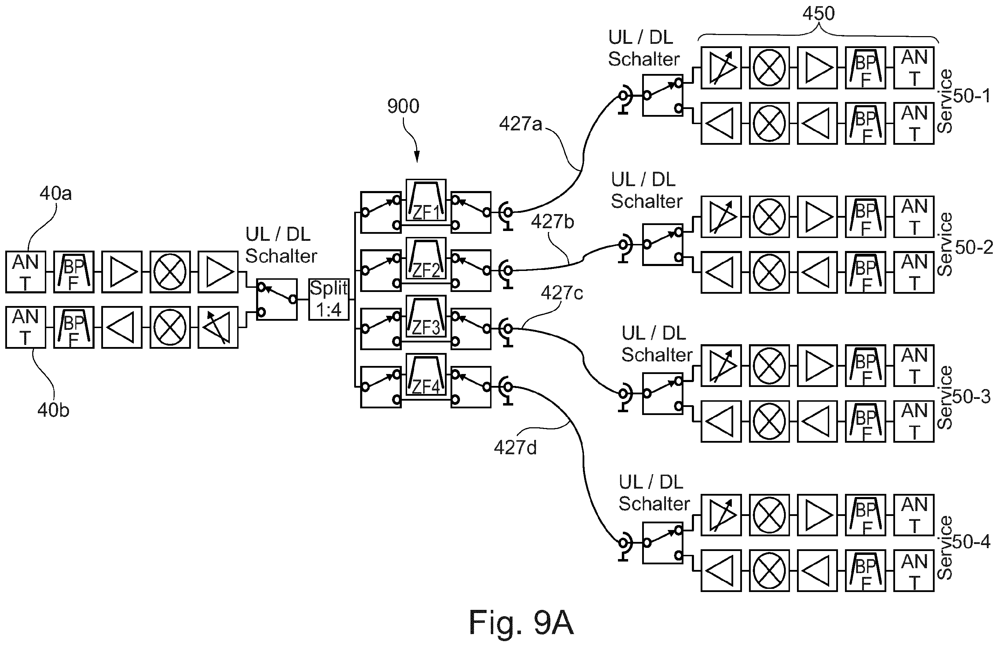

Fig. 9A zeigt ein Blockschaltbild für die Implementierung des Repeater-Systems 10 aus Fig. 7 mit einer Donor-Einheit 400, die über das Kabel 427a-c mit vier unterschiedlichen Service-Einheiten 450a-c verbunden ist. Wie aus der Fig. 9A zu erkennen ist, ist die Donor-Einheit 400 mit einem Signalselektor 900 verbunden. Der Signalselektor 900 umfasst vier Bandpassfilter, die jeweils nur die Funksignale von einer der vier Zwischenfrequenzen ZF1, ZF2, ZF3 und ZF4 auswählt, und diese ausgewählten Funksignale an eine entsprechende Service-Einheit 450-1, 450-2, 450-3 und 450-4 überträgt.

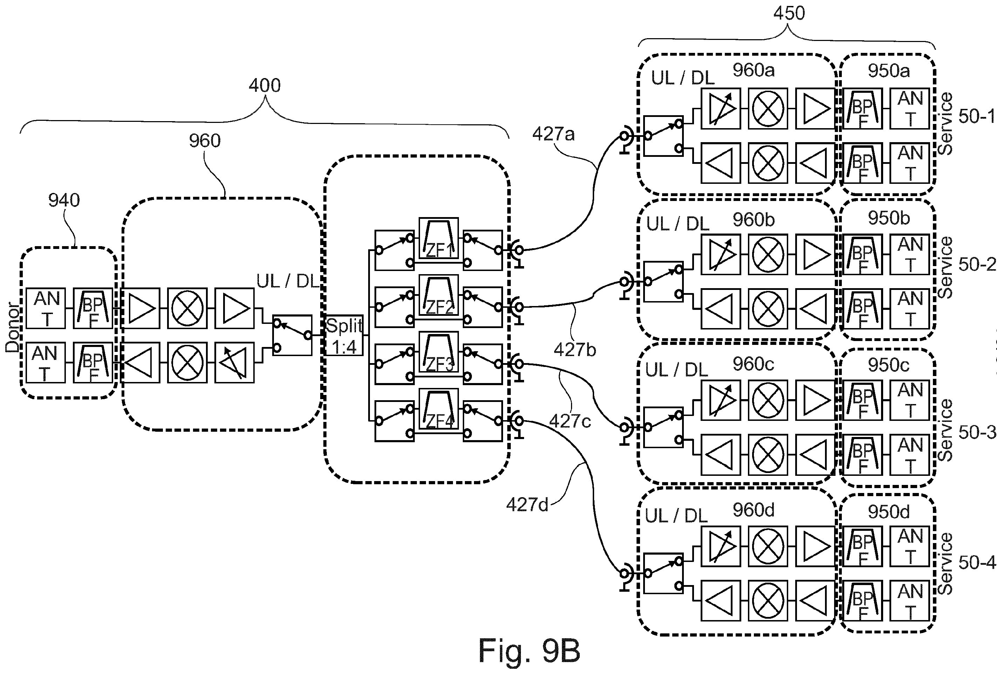

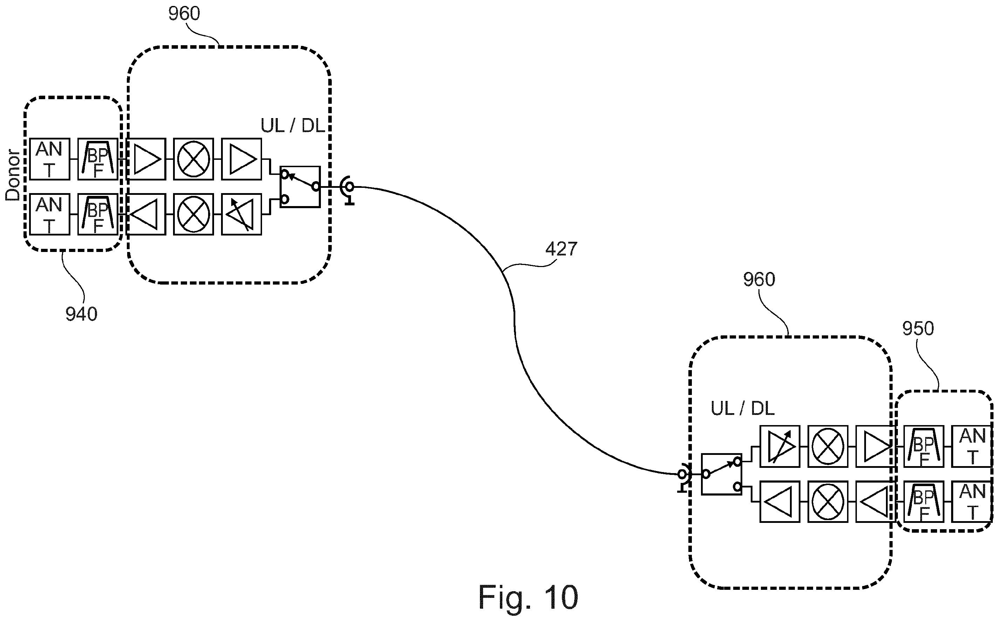

Fig. 9B zeigt den modularen Aufbau des Repeater-Systems 10. Wie aus der Figur zu erkennen ist, ist die Donor-Antenne mit Bandpassfilter 940 vom Elektronikmodul 960 in der Donor-Einheit 400 getrennt. Die Service-Einheiten 450 sind ebenfalls in Modulen aufgeteilt. Die Elektronikmodule 960a, 960b, 960c und 960d sind ähnlich aufgebaut und sind von den Service-Antennen 50 mit Bandpassfilter 950a, 950b, 950c und 950d getrennt. Dieser modulare Aufbau ist ebenfalls in Fig. 10 in einfacher Form dargestellt.

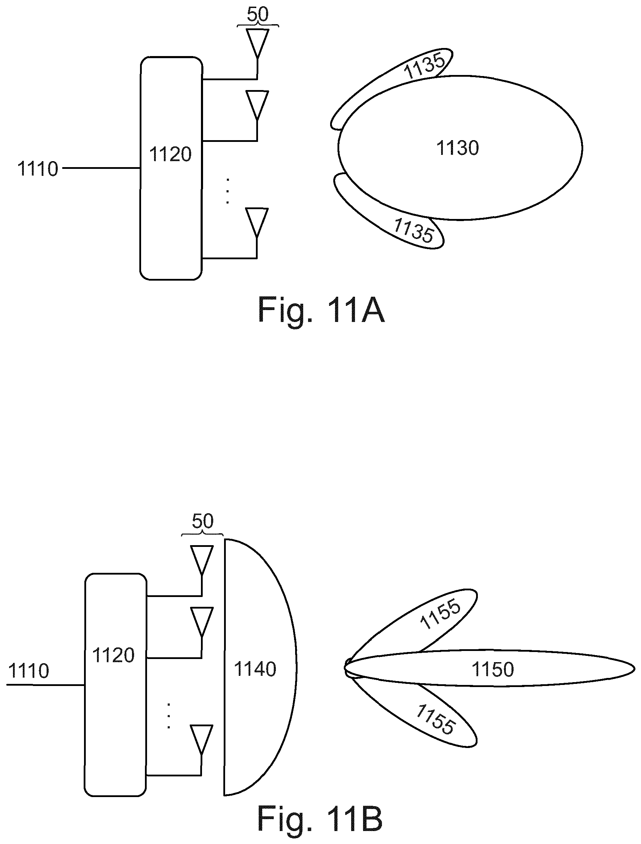

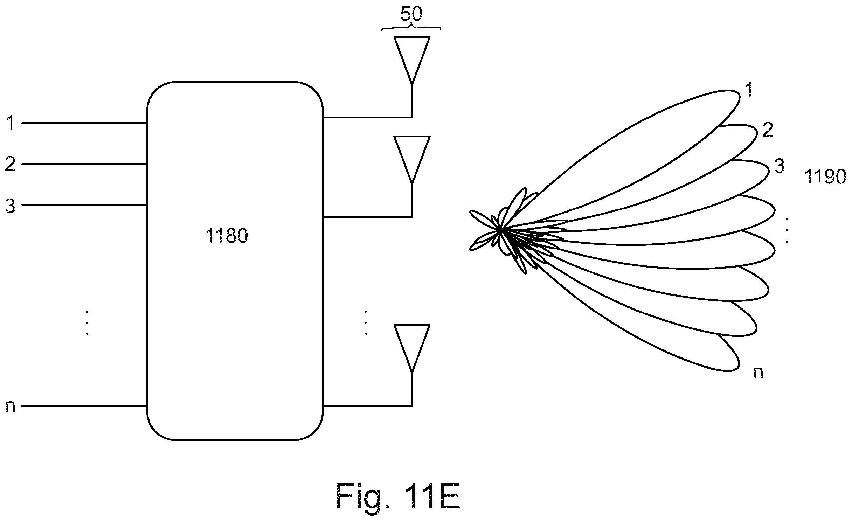

Fig. 11A-11E zeigen die Verwendung des Repeater-Systems 10 zur Bündelung der Funksignale auf der Service-Seite. Die Funksignale werden über eine Leitung 1110 von der Donor-Einheit 400 empfangen und in einem Verteilernetzwerk 1120 oder Beamforming-Netzwerk (auch als Strahlformung-Netzwerk oder Keulenbildung-Netzwerk) verteilt bzw. umgeformt und an die Service-Antennen 50 weitergegeben. Durch diese Verteilung können verschiedene Abstrahlcharakteristika der Service-Antennen 50 erstellt werden. Zum Beispiel zeigt Fig. 11A eine einfache Abstrahlcharakteristik mit einer Hauptkeule 1130 und zwei Nebenkolben 1135.

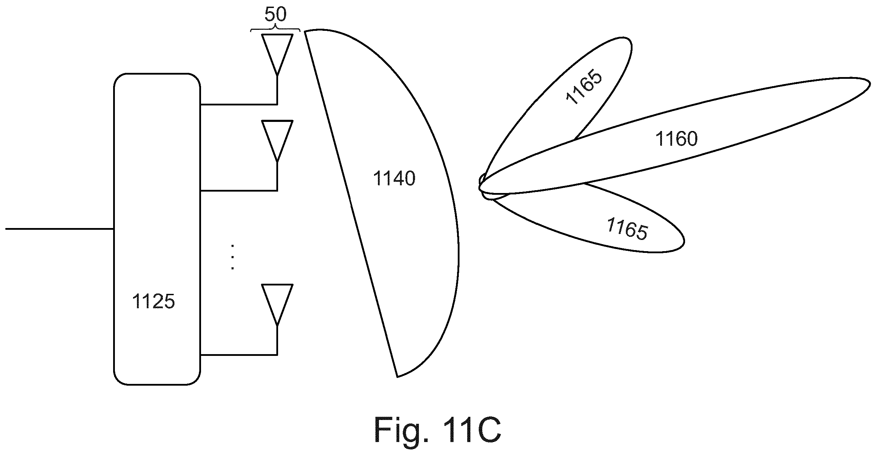

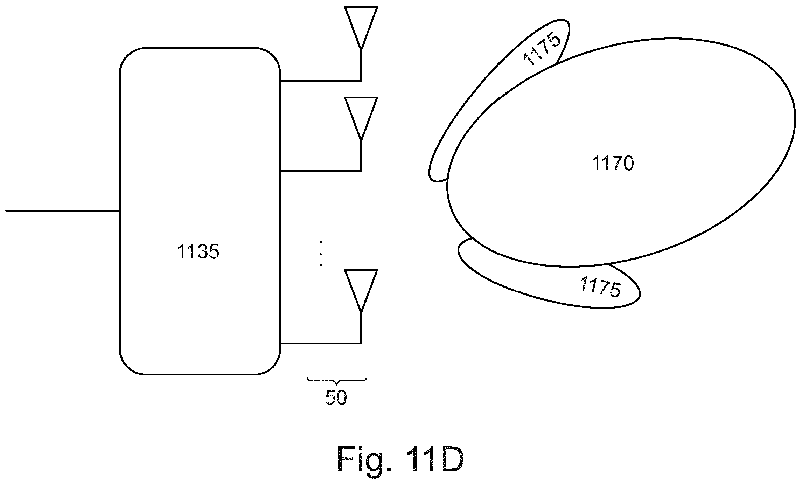

Die Verwendung der dielektrischen Linse 1140 ist in Fig. 11B dargestellt. Daraus ergibt sich eine sehr starke Hauptkeule 1150 mit Nebenkeulen 1155. In Fig. 11C ist ein Beamforming- Netzwerk dargestellt mit einer dielektrischen Linse 1140, die ebenfalls eine Abstrahlcharakteristik mit einer starken Hauptkeule 1160 und Nebenkeulen 1165 aufweist, die in diesem Aspekt der Erfindung geschwenkt ist. Die Schwenkung der Hauptkeule 1170 mit Nebenkeulen 1175 der Funksignale durch das Beamforming-Netzwerk 1125 ist bekannt und wird in Fig. 11D gezeigt. In einem weiteren Aspekt der Erfindung wird eine Rotmann-Linse 1180 als Verteilernetzwerk eingesetzt. Damit können die Funksignale in eine Vielzahl von Strahlungsrichtungen (Beams) 1190 gebündelt werden.

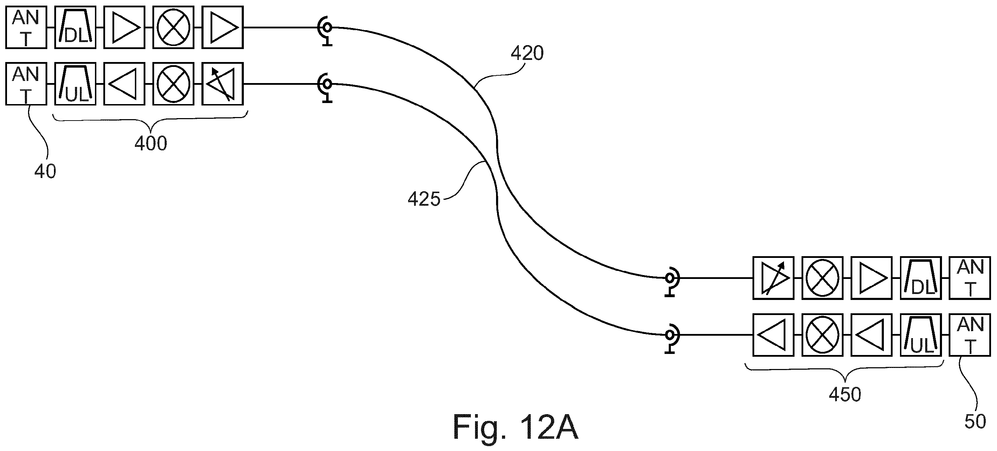

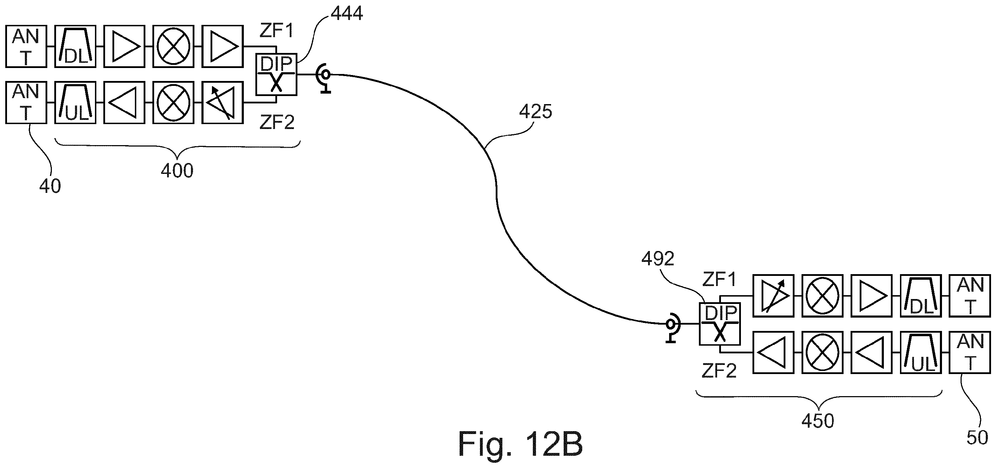

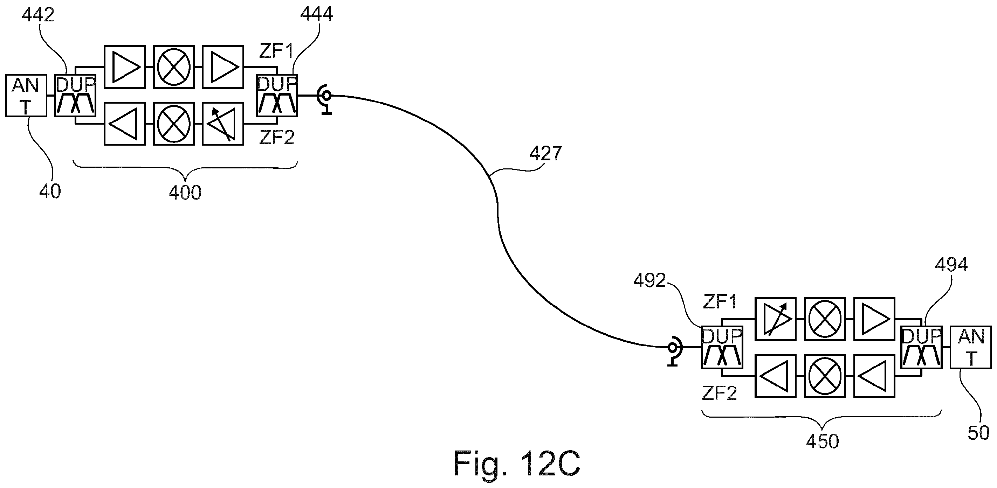

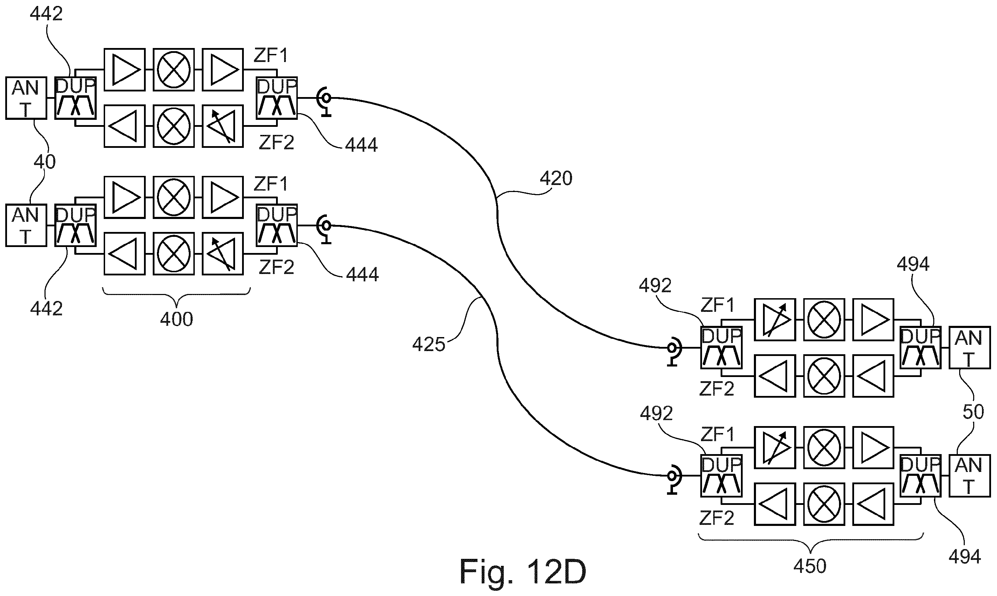

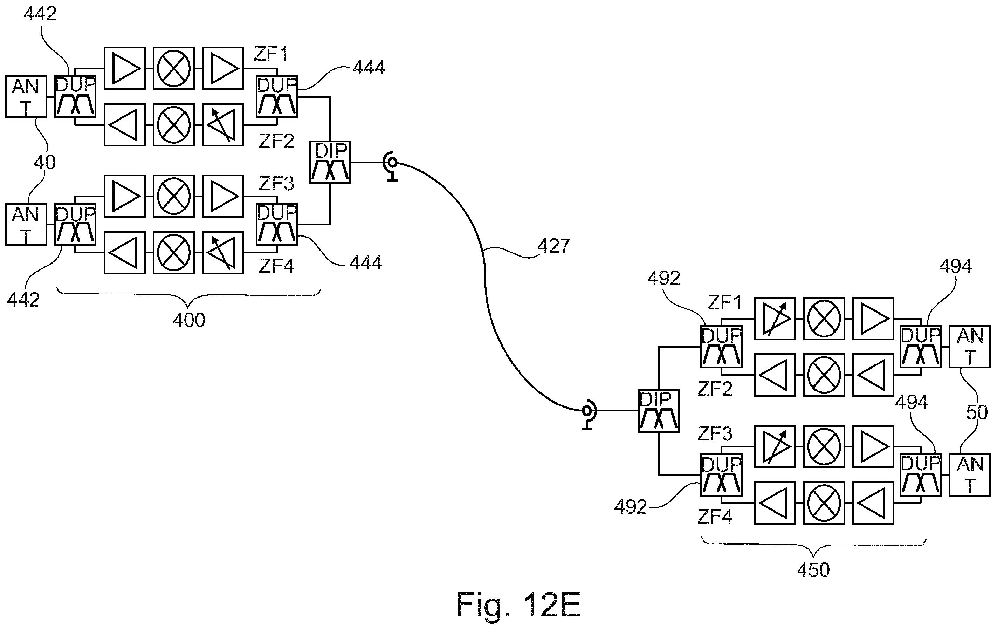

Die Erfindung lässt sich auch für Repeater-Systeme 10 mit Frequenzbereich Duplex (Frequency Division Duplex oder FDD) verwenden, wie aus Fig. 12A-12E zu erkennen ist. Der Aufbau der jeweiligen Figuren ist ähnlich wie für Repeater-Systeme 10 mit Zeitbereich Duplex (Time Division Duplex oder TDD). Fig. 12A zeigt die Übertragung der Funksignale zwischen der Donor-Einheit 400 und der Service-Einheit 450. Fig. 12B zeigt eine gemeinsame Übertragung der Funksignale auf dem gemeinsamen Kabel 427 mit zwei unterschiedlichen Zwischenfrequenzen in ZF1 und ZF2 mit einem Duplexer 444 in der Donor-Einheit 400 und einem Duplexer 492 in der Service-Einheit 450 . Fig. 12C zeigt die Verwendung einer einzelnen Donor-Antenne 40 und einer einzelnen Service-Antenne 50 durch die Zusammenführung der Uplink und Downlink Signale an der Donor Antenne 40 mit einem Duplexer 442 und der Zusammenführung der Uplink und Downlink Signale an der Service Antenne 50 mit einem Duplexer 494. Fig. 12D zeigt das Repeater-System aus Fig. 12C mit zwei unterschiedlichen Übertragungspfaden und Fig. 12E wie das gemeinsame Kabel 427 bei der Donor-Einheit 400 und bei der Service-Einheit 450 durch die Verwendung von verschiedenen Zwischenfrequenzen ZF1, ZF2, ZF3 und ZF4 eingesetzt werden kann. Es können weitere Donor-Einheiten 400 und Service-Einheiten 450 dazu kommen.

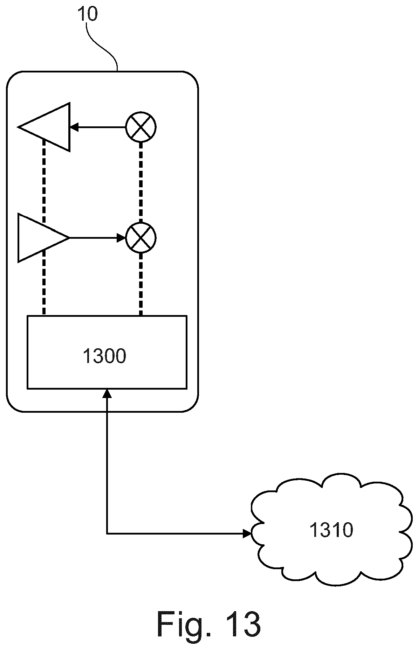

In Fig. 13 ist gezeigt, dass die Steuerung des Repeater-Systems 10 über ein sogenanntes IoT-Modem 1300 von extern über ein IT-Netzwerk 1310 angesteuert werden kann.

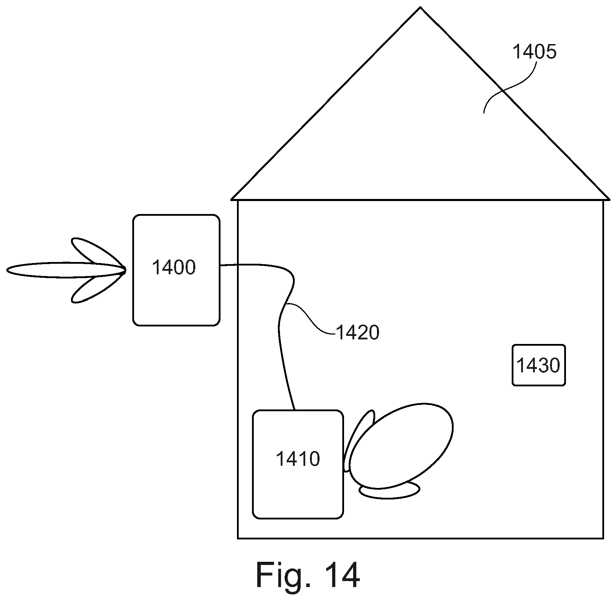

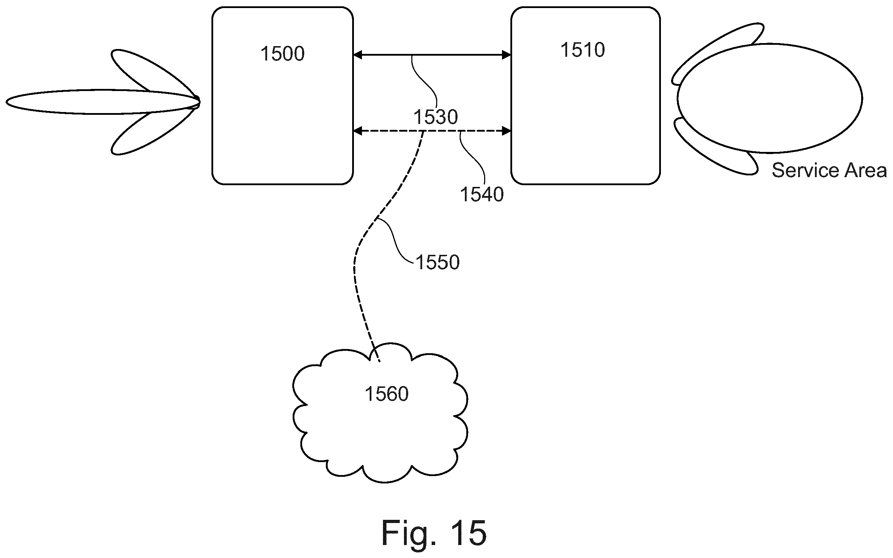

Eine Anwendung des Repeater-Systems 10 dieses Dokuments ist zum Beispiel in Fig. 14 dargestellt und ist in einem Gebäude 1405, das schon mit Koaxialleitungen 1420 verkabelt ist. Diese bereits vorhandenen Koaxialleitungen können wiederverwendet werden mit Hilfe des Repeater-Systems 10 dieses Dokuments. In diesem Fall ist die Zwischenfrequenz ZF so ausgewählt, dass die Signale auf der vorhandenen Koaxialleitung 1420 nicht durch das Funksignal gestört wird, welches zwischen der Donor-Einheit 1400 und der Service-Einheit 1410 übertragen wird. Dadurch kann man Mobilstationen (Userequipment) 1430 in einem Gebäude mit Funksignalen versorgen. Fig. 15 zeigt einen weiteren Aspekt des Repeater-Systems 10 dieses Dokuments. Mindestens ein Übertragungsweg (z.B. 1530) über z.B. Leitungen 1540 zwischen der Donor-Einheit 1500 und der Service-Einheit 1510 kann mit zusätzlichen Steuersignalen beaufschlagt werden und zum Beispiel über eine zusätzliche Übertragungsweg 1550 Daten aus dem bzw. in das IT-Netzwerk 1560 übertragen.

### Bezugszeichen

- 10: Repeater
- 20: Basisstation
- 30: Mobilstation
- 40: Donor-Antenne
- 40a: Downlink-Donor-Antenne
- 40b: Uplink-Donor-Antenne
- 45: Koaxialleitung
- 50: Service-Antenne
- 50a: Downlink-Service-Antenne
- 50b: Uplink-Service-Antenne
- 55: Koaxialleitung

- 100: Erster Duplexer
- 105: Erster Schalter
- 110: Downlink-Verstärker
- 120: Downlink-Bandpassfilter
- 130: Downlink-Leistungsverstärker
- 150: Zweiter Duplexer
- 155: Zweiter Schalter
- 160: Uplink-Verstärker
- 170: Uplink-Bandpassfilter
- 180: Uplink-Leistungsverstärker

- 400: Erste Frequenzumsetzer-Einheit/Donor-Einheit
- 402: Donor-Schalter
- 403: Donor-Ausgangs-Schalter
- 405: Donor-Downlink-Bandpassfilter
- 410: Donor-Downlink-Verstärker
- 415: Donor-Downlink-Mischeinrichtung
- 420: Kabel
- 425: Kabel
- 427: Gemeinsames Kabel
- 430: Donor-Uplink-Mischeinrichtung
- 435: Donor Uplink Leistungsverstärker
- 440: Donor-Uplink-Bandpassfilter
- 442: Duplexer
- 444: Duplexer
- 450: Service-Einheit
- 452: Service-Eingangs-Schalter
- 455: Service-Downlink-Mischeinrichtung
- 460: Service Downlink-Leistungsverstärker
- 465: Service-Downlink- Bandpassfilter
- 470: Service-Uplink-Bandpassfilter
- 475: Service-Uplink-Verstärker
- 480: Service-Uplink-Mischeinrichtung
- 490: Service-Schalter
- 492: Duplexer
- 494: Duplexer

- 500: Donor-Duplexer
- 510: Service-Duplexer

- 600a,b: Mischeinrichtung
- 610a,b: Mischeinrichtung
- 650a,b: Mischeinrichtung
- 660a,b: Mischeinrichtung

- 700: Splitter
- 710: Kabel

- 900: Signalselektor
- 940: Donor-Antenne mit Bandpassfilter
- 950: Service-Antenne mit Bandpassfilter
- 960: Elektronikmodul

- 1110: Leitung
- 1120: Verteilernetzwerk
- 1125: Beamforming-Netzwerk
- 1130: Hauptkeule
- 1135: Nebenkeule
- 1140: Dielektrische Linse
- 1150: Hauptkeule
- 1155: Nebenkeule
- 1160: Hauptkeule
- 1165: Nebenkeule
- 1170: Hauptkeule
- 1180: Rotmann Linse
- 1190: Strahlungsrichtung (Beam)

- 1300: IoT Model
- 1310: ITG Netzwerk

- 1400: Donor-Einheit
- 1405: Gebäude
- 1410: Service-Einheit
- 1420: Koaxialleitungen
- 1430: User-Equipment

- 1500: Donor-Einheit
- 1510: Service-Einheit
- 1530: Übertragungsweg
- 1540: Leitungen
- 1550: Zusätzlicher Übertragungsweg
- 1560: IT-Netzwerk

## Patentansprüche

1. Repeater-System (10) zur Weiterleitung von Funksignalen umfassend:
eine Donor-Einheit (400) zur Umsetzung der Frequenzen der Funksignale von der Übertragungsfrequenz auf eine Zwischenfrequenz (ZF);
mindestens eine Service-Einheit (450) zur Umsetzung der umgesetzten Funksignale von der Zwischenfrequenz (ZF) auf die Übertragungsfrequenz; und
mindestens ein Kabel (420, 425, 427), welches die Donor-Einheit (400) und die Service-Einheit (450) verbindet und die umgesetzten Funksignale über eine Distanz zwischen der Donor-Einheit (400) und der Service-Einheit (450) auf der Zwischenfrequenz (ZF) überträgt,
wobei mindestens die Donor-Einheit (400) eine Uplink-Donor-Antenne (40b) und eine getrennte separate Downlink-Donor-Antenne (40a) aufweist und die Service-Einheit (450) eine Uplink-Service-Antenne (50b) aufweist und zugleich eine separate Downlink-Service-Antenne (50a) aufweist, und
wobei das Repeater-System (10) ferner einen Donor-Downlink-Verstärker (410) umfasst, dessen Verstärkung einstellbar ist, wobei die Gesamtverstärkung durch Einstellen des Donor-Downlink-Verstärkers (410) so eingestellt wird, dass die Summe der Gesamtverstärkung zwischen der Downlink-Donor-Antenne (40a) und Uplink-Service-Antenne (50b) geringer als die Entkopplung zwischen Uplink-Donor-Antenne (40b) und der Downlink-Service-Antenne (50a) ist.

2. Repeater-System (10) nach Anspruch 1, wobei die Funksignale im Betrieb im TDD-Modus übertragen sind.

3. Repeater-System (10) nach Anspruch 1 oder 2, wobei die Funksignale im Betrieb im Zentimeter- und Millimeter-Bereich übertragen werden.

4. Repeater-System (10) nach einem der vorhergehenden Ansprüche, wobei die Donor-Einheit (400) einen getrennten Donor-Uplink- Pfad und einen separaten Donor-Downlink-Pfad aufweist und die Service-Einheit (450) einen Service-Uplink-Pfad und einen separaten Service-Downlink-Pfad aufweist.

5. Repeater-System (10) nach einem der vorhergehenden Ansprüche, umfassend weitere Service-Einheiten (450) und mehrere Kabel (420, 425, 427), welche jeweils die Donor-Einheit (400) und die weiteren Service-Einheiten (450) miteinander verbinden und die umgesetzten Funksignale über eine Distanz zwischen der Donor-Einheit (400) und den verbundenen, weiteren Service-Einheiten (450) übertagen.

6. Repeater-System (10) nach Anspruch 5, wobei die weiteren Service-Einheiten (450) derart angepasst sind, dass die Service-Einheiten (450) Funksignalen in unterschiedlichen Richtungen abstrahlen und empfangen.

7. Repeater-System (10) nach Anspruch 6, wobei sich die Service-Einheiten (450) an einem Standort befinden und in unterschiedliche ggfs. überlappende Sektoren abstrahlen.

8. Repeater-System (10) nach einem der Ansprüche 1, 3, 5, 6 oder 7, wobei die Service-Einheiten (450) im Betrieb Funksignale unterschiedlicher Übertragungsfrequenzen abstrahlen und empfangen.

9. Repeater-System (10) nach einem der Ansprüche 1 bis 6, wobei die Donor-Einheit (400) einen Donor-Uplink-Bandpassfilter (440) umfasst, der mit der Uplink-Donor-Antenne (40b) verbunden ist, und einen Donor-Downlink-Bandpassfilter (405) umfasst, welcher mit der Downlink-Donor-Antenne (40a) zur Übertragung der Funksignale verbunden ist.

10. Repeater-System (10) nach Anspruch 9, wobei die Donor-Einheit (400) den Donor-Uplink-Bandpassfilter (440) und den Donor-Downlink-Bandpass-Filter (405) für dieselbe Betriebsfrequenz in einem TDD-System aufweist.

11. Repeater-System (10) nach einem der Ansprüche 2 bis 7, wobei der Donor-Downlink-Pfad den Donor-Downlink-Verstärker (410) und eine Donor-Downlink-Mischeinrichtung (415) umfasst, wobei die Donor-Downlink-Mischeinrichtung (415) mit dem Kabel (420, 425, 427) verbunden ist.

12. Repeater-System (10) nach einem der vorhergehenden Ansprüche, wobei die Entkopplung zwischen der Uplink-Donor-Antenne (40b) und der Downlink-Donor-Antenne (40a) mindestens 40 dB beträgt und, optional,
wobei die Entkopplung zwischen der Uplink-Donor-Antenne (40b) und der Downlink-Donor-Antenne (40a) für ein TDD-System mindestens 60 dB beträgt.

13. Repeater-System (10) nach einem der vorhergehenden Ansprüche, wobei die Verstärkung des Downlink-Pfades in der Donor-Einheit (400) und/oder Server-Einheit (450) in einem TDD-System zu dem Zeitpunkt, in dem kein Nutz-Signal über diesen Verstärker läuft, abgeschaltet oder in der Verstärkung reduziert wird.

14. Repeater-System (10) nach einem der vorhergehenden Ansprüche, wobei die Donor-Einheit (400) einen Donor-Downlink-Verstärker (410) aufweist und die mindestens eine Service-Einheit (450) einen Service-Uplink-Verstärker (475) aufweist, wobei in einem TDD-System zu dem Zeitpunkt, in dem kein Nutz-Signalüber diesen Verstärker läuft, dieser abgeschaltet oder in der Verstärkung reduziert wird.

## Claims

1. A repeater system (10) for forwarding radio signals, comprising:
a donor unit (400) for converting the frequencies of the radio signals from the transmission frequency to an intermediate frequency (ZF);
at least one service unit (450) for converting the converted radio signals from the intermediate frequency (ZF) to the transmission frequency; and
at least one cable (420, 425, 427), connecting the donor unit (400) to the service unit (450) for transmitting the converted radio signals over a distance between the donor unit (400) and the service unit (450) at the intermediate frequency (ZF),
wherein at least the donor unit (400) comprises an uplink donor antenna (40b) and an isolated, separate downlink donor antenna (40a) and the service unit (450) comprises an uplink service antenna (50b) and also a separate downlink service antenna (50a), and
wherein the repeater system (10) further comprises a donor downlink amplifier (410) with adjustable gain, wherein the total gain is adjusted by adjusting the donor downlink amplifier (410) such that the sum of the total gain between the downlink donor antenna (40a) and the uplink service antenna (50b) is less than the decoupling between the uplink donor antenna (40b) and the downlink service antenna (50a).

2. The repeater system (10) according to Claim 1, wherein in operation the radio signals are transmitted in the TDD mode.

3. The repeater system (10) according to Claim 1 or 2, wherein in operation the radio signals are transmitted in the centimetre and millimetre range.

4. The repeater system (10) according to any one of the preceding claims, wherein the donor unit (400) comprises a separate donor uplink path and a separate donor downlink path, and the service unit (450) comprises a service uplink path and a separate service downlink path.

5. The repeater system (10) according to any one of the preceding claims, comprising additional service units (450) and a plurality of cables (420, 425, 427), wherein the plurality of cables connect the donor unit (400) to each of the additional service units (450) and transmit the converted radio signals over a distance between the donor unit (400) and the connected additional service units (450).

6. The repeater system (10) according to Claim 5, wherein the additional service units (450) are adapted such that the service units (450) radiate and receive radio signals in different directions.

7. The repeater system (10) according to Claim 6, wherein the service units (450) are located at one location and radiate and receive in different, possibly overlapping, sectors.

8. The repeater system (10) according to any one of Claims 1, 3, 5, 6 or 7, wherein in operation, the service units (450) radiate and receive radio signals at different transmission frequencies.

9. The repeater system (10) according to any one of Claims 1 to 6, wherein the donor unit (400) comprises a donor uplink bandpass filter (440) connected to the uplink donor antenna (40b), and a donor downlink bandpass filter (405) connected to the downlink donor antenna (40a) for transmitting the radio signals.

10. The repeater system (10) according to Claim 9, wherein the donor unit (400) comprises the donor uplink bandpass filter (440) and the donor downlink bandpass filter (405) for the same operating frequency in a TDD system.

11. The repeater system (10) according to any one of Claims 2 to 7, wherein the donor downlink path comprises the donor downlink amplifier (410) and a donor downlink mixing device (415), wherein the donor downlink mixing device (415) is connected to the cable (420, 425, 427).

12. The repeater system (10) according to any one of the preceding claims, wherein the decoupling between the uplink donor antenna (40b) and the downlink donor antenna (40a) is at least 40 dB and, optionally,
wherein the decoupling between the uplink donor antenna (40b) and the downlink donor antenna (40a) for a TDD system is at least 60 dB.

13. The repeater system (10) according to any one of the preceding claims, wherein at a time when no useful signal is passing through the amplifier, the amplification of the downlink path in the donor unit (400) and/or the service unit (450) in a TDD system is switched off or reduced in gain.

14. The repeater system (10) according to any one of the preceding claims, wherein the donor unit (400) comprises a donor downlink amplifier (410) and the at least one service unit (450) comprises a service uplink amplifier (475), wherein at a time when no useful signal is passing through said amplifier, the amplifier is switched off or reduced in gain.

## Revendications

1. Système répéteur (10) pour la transmission de signaux radio, comprenant :
une unité donneuse (400) pour convertir les fréquences des signaux radio de la fréquence d'émission à une fréquence intermédiaire (ZF) ;
au moins une unité de service (450) pour convertir les signaux radio convertis de la fréquence intermédiaire (ZF) à la fréquence d'émission ; et
au moins un câble (420, 425, 427), qui relie l'unité donneuse (400) et l'unité de service (450) et transmet les signaux radio convertis sur une distance entre l'unité donneuse (400) et l'unité de service (450) sur la fréquence intermédiaire (ZF),
dans lequel au moins l'unité donneuse (400) possède une antenne de liaison montante donneuse (40b) et une antenne de liaison descendante donneuse distincte (40a) et l'unité de service (450) possède une antenne de service de liaison montante (50b) et une antenne de service de liaison descendante distincte (50a) et
dans lequel le système répéteur (10) comprend en outre un amplificateur donneur descendant (410) dont le gain est réglable, dans lequel le gain total est réglé en ajustant amplificateur de liaison descendante donneuse (410) de sorte que la somme du gain total entre l'antenne de liaison descendante donneuse (40a) et l'antenne de service de liaison montante (50b) soit inférieure au découplage entre l'antenne de liaison montante donneuse (40b) et l'antenne de service de liaison descendante (50a).

2. Système répéteur (10) selon la revendication 1, dans lequel les signaux radio sont transmis en mode TDD pendant le fonctionnement.

3. Système répéteur (10) selon les revendications 1 ou 2, dans lequel les signaux radio sont transmis dans l'ordre du centimètre et du millimètre pendant le fonctionnement.

4. Système répéteur (10) selon une quelconque des revendications précédentes, dans lequel l'unité donneuse (400) possède une voie de liaison montante donneuse et une voie de liaison descendante donneuse distinctes et l'unité de service (450) possède une voie de liaison montante de service et une voie de liaison descendante de service distinctes.

5. Système répéteur (10) selon une quelconque des revendications précédentes, comprenant des unités de service supplémentaires (450) et une pluralité de câbles (420, 425, 427), qui connectent les unes aux autres l'unité donneuse (400) et les unités de service supplémentaires (450) et transmettent les signaux radio convertis sur une distance comprise entre l'unité donneuse (400) et les unités de service supplémentaires (450) connectées.

6. Système répéteur (10) selon la revendication 5, dans lequel les unités de service supplémentaires (450) sont conçues de telle sorte que les unités de service (450) émettent et reçoivent des signaux radio dans des directions différentes.

7. Système répéteur (10) selon la revendication 6, dans lequel les unités de service (450) sont situées à un même endroit et émettent dans différents secteurs, éventuellement superposés.

8. Système répéteur (10) selon une quelconque des revendications 1, 3, 5, 6 ou 7, dans lequel les unités de service (450) émettent et reçoivent des signaux radio de fréquences de transmission différentes pendant leur fonctionnement.

9. Système répéteur (10) selon une des revendications 1 à 6, dans lequel l'unité donneuse (400) comprend un filtre passe-bande de liaison montante donneuse (440), qui est connecté à l'antenne de liaison montante donneuse (40b) et un filtre passe-bande de liaison descendante donneuse (405), qui est connecté à l'antenne de liaison descendante donneuse (40a) pour transmettre les signaux radio.

10. Système répéteur (10) selon la revendication 9, dans lequel l'unité donneuse (400) comprend le filtre passe-bande de liaison montante donneuse (440) et le filtre passe-bande de liaison descendante donneuse (405) pour la même fréquence de fonctionnement dans un système TDD.

11. Système répéteur (10) selon une des revendications 2 à 7, dans lequel la voie de liaison descendante donneuse comprend l'amplificateur de liaison descendante donneuse (410) et un mélangeur de liaison descendante donneuse (415), dans lequel le mélangeur de liaison descendante donneuse (415) est connecté au câble (420, 425, 427).

12. Système répéteur (10) selon une des revendications précédentes, dans lequel le découplage entre l'antenne de liaison montante donneuse (40b) et l'antenne de liaison descendante donneuse (40a) est d'au moins 40 dB, et, optionnellement,
dans lequel le découplage entre l'antenne de liaison montante donneuse (40b) et l'antenne de liaison descendante donneuse (40a) pour un système TDD est d'au moins 60 dB.

13. Système répéteur (10) selon une des revendications précédentes, dans lequel le gain de la voie de liaison descendante dans l'unité donneuse (400) et/ou l'unité de serveur (450) dans un système TDD est désactivé ou réduit lorsqu'aucun signal utile ne traverse cet amplificateur.

14. Système répéteur (10) selon une des revendications précédentes, dans lequel l'unité donneuse (400) comporte un amplificateur de liaison descendante donneuse (410) et la au moins une unité de service (450) comporte un amplificateur de liaison montante de service (475), dans lequel dans un système TDD, lorsqu'aucun signal utile ne traverse cet amplificateur, l'amplificateur est désactivé ou son gain est réduit.
